Europäisches Patentamt

European Patent Office

Office européen des brevets

(19)

(11) Numéro de publication : **0 408 926 B1**

## (12) FASCICULE DE BREVET EUROPEEN

(45) Date de publication du fascicule du brevet :
**10.11.93 Bulletin 93/45**

(51) Int. Cl.$^5$ : **C03B 23/04**

(21) Numéro de dépôt : **90111861.2**

(22) Date de dépôt : **22.06.90**

(54) **Procédé de fabrication de tubes capillaires et application à la réalisation de férules pour connecteurs à fibres optiques.**

(30) Priorité : **26.06.89 FR 8908465**

(43) Date de publication de la demande :
**23.01.91 Bulletin 91/04**

(45) Mention de la délivrance du brevet :
**10.11.93 Bulletin 93/45**

(84) Etats contractants désignés :
**BE DE FR GB IT NL**

(56) Documents cités :
**EP-A- 0 259 877**
**EP-A- 0 272 112**
**FR-A- 1 572 274**
**GB-A- 241 544**
**GB-A- 842 913**

(73) Titulaire : **ALCATEL FIBRES OPTIQUES**
**35 rue Jean Jaurès, BP 20**
**F-95871 Bezons Cedex (FR)**

(72) Inventeur : **Brehm, Claude**
**56 rue Louis Rolland**
**F-92120 Montrouge (FR)**
Inventeur : **Dupont, Philippe**
**18 Square des Erables**
**Vaux le Penil, F-77000 Melun (FR)**
Inventeur : **Lerner, Pierre**
**58 allée du Fiet Lambert**
**Chevry, -F-91190 Gif Sur Yvette (FR)**

(74) Mandataire : **Weinmiller, Jürgen et al**
**Lennéstrasse 9 Postfach 24**
**D-82336 Feldafing (DE)**

# Description

La présente invention concerne un procédé de fabrication de tubes capillaires; ce procédé trouve une application pour la réalisation de férules pour connecteurs à fibres optiques.

Pour relier entre elles deux fibres optiques, sans les souder l'une à l'autre, il est courant d'utiliser un manchon capillaire, appelé férule, dans lequel sont engagées les deux fibres à relier. Ces férules sont habituellement réalisées en céramique usinée. Compte tenu des dimensions des férules (typiquement diamètre intérieur 127 microns, diamètre extérieur 2 millimètres) et de la précision exigée, l'usinage des céramiques est un procédé onéreux.

On connaît par le document EP-A-0 259 877 un procédé de réalisation d'un tube capillaire à paroi épaisse par chauffage et étirage vertical d'un ensemble de tubes coaxiaux (rapport de diamètre au moins égal à 5). Un tel assemblage de tubes coaxiaux est complexe.

Le brevet britannique 241 544 décrit un procédé similaire de fabrication d'un tube en verre ou quartz à partir d'une ébauche cylindrique tubulaire. Le processus décrit dans ce document ne permet pas d'atteindre les précisions souhaitées pour les besoins des connecteurs optiques.

Un but de l'invention est de réaliser un tube capillaire dont les diamètres intérieur et extérieur, ainsi que la concentricité, sont définis avec une grande précision, tout en conservant un prix de revient bas.

Le procédé tel que défini par la revendication 1 permet la réalisation, à peu de frais, de tubes capillaires en verre ou matériau analogue, ayant toute la précision requise dans les applications de la connectique.

On peut réaliser une férule en sectionnant une longueur donnée du tube capillaire obtenu comme indiqué ci-dessus.

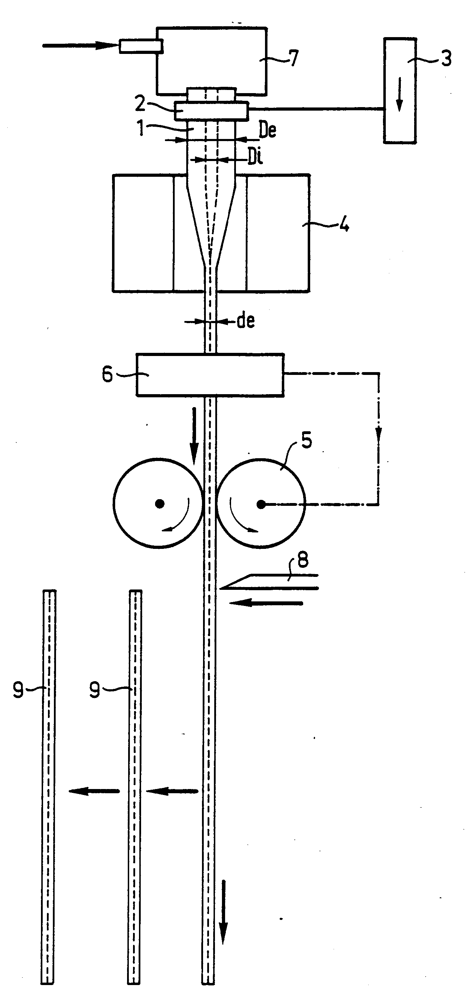

La figure unique illustre le procédé de fabrication.

Une ébauche en verre 1, sous forme d'un tube rectifié, est disposée verticalement et maintenue par un organe de maintien 2 associé à un mécanisme 3 permettant de faire descendre l'ébauche au fur et à mesure de la fabrication du tube capillaire.

Pour obtenir un tube capillaire ayant un diamètre interieur (di) égal à 0,127 mm avec une tolérance nulle en moins et une tolérance de 0,004 mm en plus, et un diamètre extérieur (de) de 2,5 mm plus ou moins 0,002mm, on utilisera une ébauche dont les diamètres extérieur (De) et intérieur (Di) auront les mêmes tolérances. Ainsi, si le rapport (De/de) est de 25, le rapport (Di/di) étant également égal à 25, on choisira pour (De) une valeur de 62,5mm plus ou moins 0,5mm et une valeur de (Di) de 3,175mm avec une tolérance 0 en moins et de 0,1mm en plus.

L'ébauche est introduite dans un four 4 où la température est réglée pour rester inférieure à la température de fibrage du matériau.

Pour un verre de silice pure, la température utilisée dans le procédé de l'invention sera de l'ordre de 1900 degrés Celsius alors que la température de fibrage est de 2100 degrés. Pour un verre crown, tel que celui connu sous la désignation B 2359, on choisira une température de 800 degrés alors que la température de fibrage est de l'ordre de 900 degrés.

Bien entendu, le procédé de l'invention n'est pas limité aux exemples précités; il s'applique à toutes variétés de verre ou quartz, en particulier au verre flint; l'homme du métier saura choisir la température adéquate dans chaque cas particulier.

La fibre qui se forme par diminution du diamètre de l'ébauche est tirée par un dispositif mécanique 5 opérant entre ligne droite, du type à rouleaux ou à chenilles. La force de traction est asservie au diamètre actuel du tube capillaire qui est mesuré périodiquement ou en permanence par un organe de mesure 6. La vitesse de tirage est de préférence comprise entre 1 et 5 mètres par minute.

Selon le procédé, on introduit, à l'intérieur du tube capillaire, une faible surpression, au moyen d'un gaz injecté dans un collecteur 7 surmontant l'ébauche. La surpression sera typiquement comprise entre 266 et 2660 Pascals (entre 2 et 20 torrs), et facilement régulée selon le taux de fuite apporté par l'orifice du tube capillaire.

Le choix du gaz n'est pas critique; il suffit de choisir un gaz neutre vis-à-vis du verre, et ce peut être par exemple de l'air ou de l'azote.

Pour réaliser des férules, on utilise un couteau 8 qui permet de couper des tronçons 9 de tube capillaire d'une longueur choisie.

Lorsque le rapport de réduction des diamètres est de 25, comme indiqué dans l'exemple cité plus haut, on peut obtenir, avec une ébauche de longueur 250mm, une fibre de 250x25x25 = 156 250 millimètres, soit 150 mètres environ. Ceci permet de confectionner 15 000 férules de 10 millimètres de longueur ou 7500 férules de 20 millimètres de longueur.

On voit que le procédé de l'invention associe à la précision requise pour les applications de connectique optique, une économie importante du coût de fabrication des férules. Il peut être mis en oeuvre dans une installation de fibrage pour fibres optiques.

# Revendications

1. Procédé de fabrication de tubes capillaires en un matériau vitreux par chauffage et étirage d'une ébauche cylindrique tubulaire, comprenant les operations suivantes:
   - on réalise, dans un matériau choisi parmi le verre de silice ou le verre crown, une ébauche (1) ayant la forme d'un tube cylindrique de diamètre extérieur (De) et de diamètre intérieur (Di), ces diamètres étant définis avec des précisions relatives au moins égales aux précisions relatives demandées respectivement pour le diamètre extérieur (de) et le diamètre intérieur (di) du tube capillaire à réaliser,

- on dispose cette ébauche verticalement dans une installation de fibrage pour fibres optiques et on chauffe (4) sa partie inférieure à une température inférieure à la température de fibrage du matériau, de l'ordre de 1900 degrés Celsius lorsque le verre utilisé est du verre de silice, et de l'ordre de 800 degrés Celsius lorsque le verre utilisé est du verre crown,

- on exerce simultanément au chauffage une traction sur le tube en formation à la partie inférieure de l'ébauche, de manière à l'étirer jusqu'à obtention du diamètre extérieur (de),

- on introduit (7), à l'intérieur de l'ébauche (1), un gaz, de manière à réaliser à l'intérieur du tube capillaire en formation, une surpression comprise entre 266 et 2660 Pascals (entre 2 et 20 torrs) par rapport à la pression ambiante,

- on règle la vitesse d'étirage entre 1 et 5 mètres/minute en mesurant (6) périodiquement ou en permanence le diamètre extérieur du tube capillaire obtenu.

2. Procédé selon la revendication 1, caractérisé par le fait que l'on prévoit pour le diamètre extérieur (de) dudit tube capillaire une précision relative de $\pm\dfrac{1}{1250}$, et pour le diamètre intérieur (di) une précision relative sensiblement de -0 et $+\dfrac{1}{30}$.

3. Tube capillaire caractérisé en ce qu'il est réalisé selon la revendication 2.

4. Férule, caractérisée en ce qu'elle est obtenue par sectionnement d'un tube capillaire réalisé selon la revendication 3.

**Patentansprüche**

1. Verfahren zur Herstellung von Kapillarrohren aus Glasmaterial durch Erhitzen und Streckformen eines rohrförmigen zylindrischen Rohlings, mit den folgenden Verfahrensschritten:
- man stellt aus einem Material, das aus Siliziumdioxidglas oder Kronglas ausgewählt wird, einen Rohling (1) her, der die Form eines Zylinderrohrs mit einem Außendurchmesser (De) und einem Innendurchmesser (Di) hat, wobei diese Durchmesser mit einer relativen Genauigkeit definiert sind, die mindestens gleich der geforderten relativen Genauigkeit für den Außendurchmesser (de) und den Innendurchmesser (di) des herzustellenden Kapillarrohrs sind,

- man setzt diesen Rohling senkrecht in eine Streckformanlage für Lichtleitfasern ein und man erhitzt (4) seinen unteren Bereich auf eine Temperatur unterhalb der Streckformtemperatur des Materials, z.B. auf 1900 Grad Celsius, wenn das verwendete Glas Siliziumdioxidglas ist, und auf 800°C, wenn das verwendete Glas Kronglas ist,

- man zieht gleichzeitig mit der Erhitzung das sich am unteren Teil des Rohlings bildende Rohr, um es zu strecken, bis der Außendurchmesser (de) erhalten wird,

- man führt in das Innere des Rohlings (1) ein Gas (7) ein, um im Inneren des sich bildenden Kapillarrohrs einen Überdruck herzustellen, der zwischen 266 und 2660 Pascal (zwischen 2 und 20 Torr) in Bezug auf den Umgebungsdruck liegt,

- man reguliert die Streckgeschwindigkeit zwischen 1 und 5 Meter pro Minute, indem man periodisch oder permanent den Außendurchmesser des erhaltenen Kapillarrohrs mißt (6).

2. Verfahren nach Anspruch 1, dadurch gekennzeichnet, daß man für den Außendurchmesser (de) des Kapillarrohrs eine relative Genauigkeit von ± 1/1250 und für den Innendurchmesser (di) eine relative Genauigkeit von im wesentlichen zwischen -0 und + 1/30 vorsieht.

3. Kapillarrohr, dadurch gekennzeichnet, daß es gemäß Anspruch 2 hergestellt wird.

4. Muffe, dadurch gekennzeichnet, daß sie durch Zerschneiden eines nach Anspruch 3 hergestellten Kapillarrohrs erhalten wird.

**Claims**

1. Method of making capillary tubes from a vitreous material by heating and drawing a tubular cylindrical blank, comprising the following operations:
- a blank (1) of silica glass or crown glass is prepared in the form of a cylindrical tube of outside diameter (De) and inside diameter (Di), said diameters being defined with tolerances at least equal to the tolerances for the outside diameter (de) and the inside diameter (di) of the capillary tube to be made,

- said blank is disposed vertically in an optical fibre drawing installation and its lower part is heated (4) to a temperature below the fibre drawing temperature of the material, in the order of 1 900°C if the glass is silica glass or in the order of 800°C if the glass is crown glass,

- simultaneously with the above heating, traction is applied to the tube as it is formed from the lower part of the blank so as to draw it down to the outside diameter (de),
- a gas is fed (7) into the interior of the blank (1) so as to raise the pressure inside the capillary tube as it is formed between 266 and 2 660 Pascals (between 2 and 20 torr) above ambient pressure,
- the drawing speed is adjusted to a value between 1 and 5 metres/minute by measuring (6) periodically or continuously the outside diameter of the capillary tube obtained.

2. Method according to claim 1 characterised in that the tolerance in respect of the outside diameter (de) of said capillary tube is ± 1/1 250 and in that the tolerance in respect of the inside diameter (di) is substantially (-0, +1/30).

3. Capillary tube characterised in that it is made in accordance with claim 2.

4. Ferrule characterised in that it is obtained by cutting to length a capillary tube made according to claim 3.